# EUROPEAN PATENT SPECIFICATION

(11) **EP 3 704 935 B1**
(45) Date of publication and mention of the grant of the patent: **15.01.2025**
(21) Application number: 20161298.3
(22) Date of filing: 05.03.2020
(51) Int. Cl.: A01K 61/13, A01K 61/60, A01K 61/70

(54) **CLEANER FISH HABITAT SUPPORT APPARATUS AND ARRANGEMENT**
PUTZERFISCHLEBENSRAUMUNTERSTÜTZUNGSVORRICHTUNG UND -ANORDNUNG
DISPOSITIF ET AGENCEMENT DE SUPPORT D'HABITAT DE POISSON NETTOYEUR

(30) Priority: 05.03.2019 GB 201902957
(43) Date of publication of application: 09.09.2020
(73) Proprietor: Welch, Martin, Isle of Skye IV41 8PN (GB)
(72) Inventor: Welch, Martin, Isle of Skye IV41 8PN (GB)
(74) Representative: Ellis, Michael James

(56) References cited:
- WO-A1-2016/186518
- WO-A1-2018/196936
- NO-B1- 330 707
- NO-B1- 341 733
- NO-B1- 343 056

## Description

### FIELD OF THE INVENTION

This invention pertains generally to the field of salmon cultivation in marine environments where cultivated salmon may become exposed to copepod or sea lice parasite attack within the confines of cultivation cages. More particularly the invention relates to provision of a habitat support apparatus for cleaner fish for use within an aquaculture environment, to a habitat support arrangement for cleaner fish comprising the habitat support apparatus and an arrangement of habitat-forming natural aquatic flora, and to a fish cultivation system comprising a salmon cultivation cage and the habitat support arrangement.

### BACKGROUND OF THE INVENTION

The aquaculture fin fish industry is an important provider of certain species of fish, such as Atlantic Salmon which are cultivated in cages submerged in an offshore marine environment. Ectoparasitic copepods such as sea lice that occur naturally around the world are pathogenic to salmonid species and are attracted to the unnaturally high density salmon populations retained in multi-cage cultivation. In this environment, large numbers of sea lice can quickly cause severe skin damage and consequent high mortality among fish populations. The cost involved in monitoring protecting and treating cultivated fish from sea lice is a significant element of the cost of fish farm cultivation.

Previous methods to reduce the impact on these parasite attacks involved removal of the fish for treatment in pesticide wash tanks. In recent years environmental concerns over the use of certain pesticides has reduced pesticide use and encouraged other methods such as the development of copepod filter netting applied as a skirt arrangement around the exterior of the cage. Such fine netting however requires constant cleaning due to build-up of algae and is prone to damage and degradation.

Another approach occurring in nature to protect wild salmon, is the use of parasite eating cleaner fish such as Wrasse and lumpfish which are introduced into the cage along with the cultivation fish where they act to remove and consume the ectoparasite sea lice in a natural manner. Such small parasite eating fish have a high mortality rate when introduced into the unnatural environment of cultivation cages and therefore the efficiency of parasite removal reduces and the risk of parasite damage increases throughout the fish cultivation season.

NO 330707 B1 relates to a cleaner fish hide which comprises an end portion defining a hiding space in the form of chambers along with a cloth or mesh side. NO 341733 B1 describes an artificial kelp forest formed by elongate strips between a floating rope and a sinking rope. NO 343056 B1 concerns a shelter for cleaner fish having an upper float element and sinker ring with ropes extending from the float element to the sinker ring, which ropes are configured to carry artificial kelp. The cleaner fish shelter is height adjustable whereby the sinker ring can be raised.

It would be desirable to reduce the mortality rate of the parasite eating or cleaner fish and thereby increase the effectiveness with which these fish are able to consume sea lice throughout the fish cultivation growth cycle.

The inventor has devised an apparatus for addressing this problem.

### PROBLEM TO BE SOLVED BY THE INVENTION

There is a need for improvements in protection of fish cultivated in marine cages and subject to attack by naturally occurring parasitic copepods.

It is an object of this invention to provide an apparatus to enhance the lifetime and reduce mortality rate of parasitic cleaner fish within a fish cultivation cage.

It is a further object of the invention to provide a fish farm cage system incorporating parasitic cleaner fish that enables cultivated fish within the cage to be subject to reduced ectoparasite attack.

### SUMMARY OF THE INVENTION

In accordance with a first aspect of the invention, there is provided a habitat support arrangement for cleaner fish habitat for use in an marine salmon farm cages, the habitat support arrangement comprising, according to independent claim 1, a habitat support apparatus and extending therefrom, preferably upwards therefrom (when *in situ* in a marine environment), an arrangement of habitat-forming natural aquatic, the habitat support apparatus comprising a peripheral frame arrangement comprising one or more frame members configured in an arrangement to define a habitat support region between the one or more frame members, the habitat support region comprising one or more support substrates for supporting the habitat-forming natural aquatic flora for use as cleaner fish habitat, the one or more support substrates comprising elongate members extending between two frame members or two portions of a frame member, and wherein the apparatus is negatively buoyant and configured for suspension within a salmon farm cage and for raising and lowering within the salmon farm cage to different depths.

In a second aspect of the invention, there is provided a habitat support apparatus for use in the habitat support arrangement above, the apparatus comprising, according to independent claim 10, a peripheral frame arrangement comprising one or more frame members configured in an arrangement to define a habitat support region between the one or more frame members, the habitat support region comprising one or more support substrates for supporting the habitat-forming natural aquatic flora for use as cleaner fish habitat, the one or more support substrates comprising elongate members extending between two frame members or two portions of a frame member, wherein the arrangement is negatively buoyant and configured for suspension within a salmon farm cage and for raising and lowering within the salmon farm cage to different depths.

In a third aspect of the invention, there is provided a fish cultivation system comprising, according to independent claim 11, a salmon cultivation cage and suspended therein a habitat support arrangement as defined above, wherein the habitat support arrangement is suspended from a floating member disposed within a perimeter of the salmon cultivation cage and which may be raised or lowered to varying depths within the salmon cultivation cage by way of a winch arrangement disposed in relation to the salmon cultivation cage.

### ADVANTAGES OF THE INVENTION

The apparatus, arrangement and system of the present invention enable the reduction of ectoparasite attack on fish cultivated in marine salmon farm cages. The apparatus and arrangement have an advantage of providing a suitable habitat for ectoparasite removing cleaner fish, which apparatus is adapted for raising and lowering to enable the apparatus to be positioned at different depths according to seasonal behaviour of cleaner fish. The apparatus is designed to create a sheltered environment within the cage more typical of the chosen habitat of cleaner fish in a natural marine environment.

The aquaculture or fish farm cage system having a habitat support arrangement and cleaner fish within the cage and has the advantage of providing extended longer duration protection for cultivated fish against ectoparasite sea lice attack and longer duration lifespan of cleaner fish.

### BRIEF DESCRIPTION OF THE DRAWINGS

Figure 1 illustrates in front perspective view a habitat support apparatus according to one embodiment of the invention;
Figure 2 illustrates a front perspective view a habitat support apparatus of Figure 1 during construction;
Figure 3A is an illustration of a perspective view of a fish cultivation system according to an embodiment of the invention, showing a habitat support apparatus of Figure 1 disposed in a fish cultivation cage in one configuration and Figure 3B is an illustration of the habitat support apparatus of Figure 3A in another configuration;
Figures 4A and 4B illustrate in perspective view a fish cultivation system of an embodiment of the invention with further embodiments of a habitat support apparatus of the invention.
Figures 5A and 5B illustrate in plan view a habitat support apparatus according to other embodiments of the invention;
Figure 6 illustrates in perspective view a habitat support apparatus according to a yet further embodiment of the invention; and
Figure7 illustrates a propagation system according to another embodiment of the invention.

### DETAILED DESCRIPTION OF THE INVENTION

The habitat support apparatus and habitat support arrangement according to the invention is for providing a habitat for cleaner fish in marine salmon farm cages.

The apparatus and arrangement is for providing a habitat for cleaner fish, which may be any suitable cleaner fish for use in aquaculture. A cleaner fish may be any fish which provides a service to other species in the aquaculture system, preferably other fish and more preferably the fish being cultivated, such as removing dead skin or preferably removing ectoparasites, such as sea lice. Preferably, the cleaner fish comprise one or more species of wrasse and/or one or more species of lumpfish.

A habitat support apparatus according to the invention comprises a peripheral frame arrangement configured to define a habitat support region. The habitat support region comprises one or more support substrates for supporting aquatic flora for use as cleaner fish habitat. The support substrates are disposed in relation to the peripheral frame arrangement.

The peripheral frame arrangement comprises one or more frame members. The one or more frame members are configured in an arrangement to so as to define a habitat support region between the one or more frame members or portions thereof. The habitat support region is characterized by the provision of a habitat support substrate. The habitat support substrate may be any suitable substrate for supporting a habitat. For example, it may be netting, metal rods, surface treated plastic rods or preferably a rope or lengths of rope.

The peripheral frame arrangement may be provided in any suitable configuration that defines a habitat support region between one or more frame members or portions.

The apparatus, and preferably the peripheral frame arrangement, may have any suitable shape, which may include an `open shape' such as an 'I' shape or a 'U' shape or other open shape in which the peripheral frame does not completely enclose the habitat support region. According to this embodiment, the frame may comprise one or more rigid peripheral frame members in such an open arrangement and, in the habitat support region, support substrate such as tensioned ropes disposed between the frame members, such as opposing frame members (e.g. in an 'I' configuration).

Alternatively and preferably, the peripheral frame arrangement defines a closed arrangement whereby the peripheral frame arrangement encloses the habitat support region. According to this embodiment, the apparatus may be a circular, oval or elliptical shape, a triangular shape, a regular or irregular quadrangular shape, such as a rectangle, a regular or irregular pentagonal shape, a regular or irregular hexagonal shape, a regular or irregular heptagonal shape or a regular or irregular octagonal shape.

According to one embodiment of the invention, the peripheral frame arrangement comprises an outer peripheral frame and an inner peripheral frame, each of the outer peripheral frame and the inner peripheral frame formed of one or more frame members, wherein the area between the outer peripheral frame and the inner peripheral frame defines the habitat support region. Preferably, the inner peripheral frame defines a medial aperture in the apparatus (which is largely and preferably entirely not occupied by habitat support substrate).

According to this embodiment, the habitat support region comprises elongate support substrates extending between the outer peripheral frame and the inner peripheral frame.

According to this embodiment, the inner and outer peripheral frames each independently define circular, oval or elliptical shape, a triangular shape, a regular or irregular quadrangular shape, such as a rectangle, a regular or irregular pentagonal shape, a regular or irregular hexagonal shape, a regular or irregular heptagonal shape or a regular or irregular octagonal shape.

The peripheral frame arrangement according to this embodiment, optionally comprises one or more rigid separators disposed between the inner peripheral frame and outer peripheral frame or preferably, the peripheral frame arrangement is absent any rigid separators disposed between the inner peripheral frame and outer peripheral frame. In this arrangement, the inner and outer frames may be retained in their respective configurations by the support substrate (e.g. tensioned ropes).

In one particularly preferred embodiment, the peripheral frame arrangement is an annular frame, preferably in the form of an annular disc.

The apparatus and peripheral frame arrangement may be of any suitable size, e.g. to fit an aquaculture cage. It may be, for example, sized to cooperate with the circumference of a cage (i.e. a periphally located apparatus) or to occupy a medial portion of the cage or one or more other locations. In one embodiment, the apparatus is configured to be medially located. The apparatus and the peripheral frame arrangement of the apparatus according to one embodiment of the invention preferably has a maximum width or diameter of from 1 m to 100 m, preferably from 2.5 m to 50 m and preferably up to about 40 m.

In one embodiment in which the peripheral frame arrangement is an open shaped frame, the maximum width or diameter is preferably up to about 30 m, preferably from 1 to 20 m, more preferably from 2 to 15 m, e.g. 3 to 10 m (such as up to 5 m).

In another embodiment in which the frame has a closed shape and a peripheral frame member defining and enclosing a habitat support region, the maximum width or diameter is preferably up to about 30 m, preferably from 1 to 20 m, more preferably from 2 to 15 m, e.g. 3 to 10 m, more preferably (such as up to 6 m or even up to 5 m).

In a further embodiment in which the frame has a closed shape and a peripheral frame arrangement having an outer peripheral frame and an inner peripheral frame, the habitat support region being defined as between the outer and inner frames, the maximum width or diameter is preferably at least 5m and may be as large as the cage in which it is disposed, e.g. up to 75 m. Preferably, the maximum width or diameter is from 5 m to 50 m, preferably at least 10 m, more preferably at least 15 m and preferably up to about 40 m, still more preferably from 25 to 35 m. Optionally, smaller versions can be prepared, e.g. having a maximum width or diameter of from 4 to 20 m.

In an apparatus with a peripheral frame arrangement having an outer peripheral frame and an inner peripheral frame, the maximum width or diameter of the inner peripheral frame may be from 10 to 90% of that of the outer peripheral frame, preferably from 20 to 80%, more preferably from 30 to 70%, e.g. from 40 to 60%. Optionally, the separation (e.g. radial separation) between the outer and inner peripheral frames is from 1 m to about 20 m, e.g. from 3 to 10 m. In the embodiment of the apparatus having an outer peripheral frame and an inner peripheral frame, an aperture is preferably defined by the inner peripheral frame. The aperture preferably has a maximum width or diameter of 2 to 20 m, preferably 5 to 10 m. Preferably, the apparatus of this embodiment is circular and more preferably both the inner and outer peripheral frames are circular.

Most preferably, the apparatus and the peripheral frame member have a circular, annular or rectangular shape, more preferably circular.

The apparatus of the invention is preferably a generally planar or planate or flattened configuration, which in situ preferably extends laterally. Preferably, the apparatus is characterized by an aspect ratio of width to depth of at least 5:1 when the peripheral frame arrangement is disposed in a plane generally parallel with the water surface, preferably at least 10:1, more preferably up to 100:1 and more preferably in the range from 15:1 to 50:1.

Preferably, in an apparatus according to the invention the peripheral frame arrangement comprises one or more frame members, so arranged to produce a shape of frame as described above. In one embodiment, the one or more frame members are formed of tubing, which preferably has a diameter of from 50 to 500 mm, more preferably 100 to 200 mm and which preferably has a wall thickness of 5 mm to 50 mm, preferably up to 30 mm and more preferably 10 mm to 20 mm.

The frame members according to this embodiment may be plastic tubing having any suitable profile, such as square, rectangular or circular, but is preferably circular.

The frame members are preferably formed of plastic and any suitable plastic material may be selected. Preferably, the plastic is polyethylene (commonly used as 'feed pipes' in the salmon farming industry).

The frame members may have any suitable size, e.g. according to the size of the frame to be constructed. For example, it preferably has a diameter of at least 50 mm and may be up to 300 mm, e.g. up to 250 mm, such as from 150 to 200 mm, but preferably from 70 to 125 mm, e.g. 80 to 100 mm. The wall thickness of the pipe may be any suitable thickness, e.g. 5 mm to 15 mm, preferably up to 10 mm and ideally about 8 mm.

In a particularly preferred embodiment, the frame members comprise 90 mm diameter, 8 mm wall thickness polyethylene pipe.

In one embodiment, in order to make circular frame members, a length of pipe may be curved around to form a circle. A short length of pipe of narrower diameter or larger diameter may be provided to form a sleeve to fit two ends of the pipe together and secure (e.g. screw together) to form the circle.

Optionally, the apparatus comprises a peripheral frame arrangement having a plurality of separators extending between inner and outer peripheral frames or between opposing portions of the peripheral frame or cross-members or other separators. The area enclosed by or between peripheral frame members defines the habitat support region. Optionally, the peripheral frame arrangement and interconnecting cross-members and separators may define an array of shapes, the space between any one or more of the array of shapes each defining a habitat support region. For example, an array of squares or rectangles may be formed.

An apparatus according to the present invention comprises a habitat support region, which comprises an arrangement of support substrates. The support substrate may take any suitable form although it should be capable of supporting habitat for cleaner fish. The support substrates elongate members in the form of one or a plurality of elongate members, each extending between two frame members or two portions of a frame member.

Preferably an arrangement of support substrates define interstitial spaces having an extent defined by separation of elongate members of from 10 cm to 100 cm, preferably at least 20 cm to thereby enable detritus to fall through the habitat support region.

The support substrate may, for example, comprise any one or combination of netting, metal rods, surface-treated plastic rods or strands of rope. Preferably, the support substrate comprises strands of rope and preferably tensioned strands of rope. Any suitable rope may be used. In one embodiment, the rope is polypropylene rope and it may have a diameter of, for example, from 5 to 50 mm, preferably 10 mm to 25 mm. The rope may optionally be of a type used for mussel cultivation (e.g. comprising frayed rope).

In an apparatus with a peripheral frame arrangement having an outer peripheral frame and an inner peripheral frame (e.g. each being circular), the support substrate (e.g. rope) is preferably linked to the outer frame at separations about the periphery (e.g. circumference) of up to 75 cm, preferably at least 10 cm, more preferably at least 20 cm, e.g. at least 25 cm, more preferably up to 50 cm, still more preferably up to 45 cm, e.g. in the range 30 to 40 cm. Similar separations from may be appropriate in apparatus with a single peripheral frame that encloses a habitat support region (e.g. a circular such apparatus) or an apparatus with an open frame.

In an apparatus with a closed peripheral frame that encloses a habitat support region, the support substrate, e.g. rope, may be arranged in any suitable arrangement, e.g. criss-cross across the region or in a grid arrangement.

Optionally, the support substrate, when the support substrate is rope, is secured to multiple fixing points on the frame members or lengths of ropes may be threaded through a series of holes formed in each frame member and successively between opposing portions of frame (e.g. inner and outer frame members). Optionally, the rope is wound around each opposing portion (e.g. inner and outer frame members) and optionally pinned in place.

In one embodiment of the apparatus, the support substrate is pre-seeded with a natural aquatic flora such as kelp.

Preferably, the apparatus of the invention comprises one or more form of shelters and/or rest surfaces for the cleaner fish. The shelters and/or rest surfaces may comprise recesses or surface and may be formed in relation to the habitat support region (e.g. formed on or between support substrates) and/or formed in relation to the peripheral frame arrangement (or separators). Preferably, there is provided disposed in, on or in relation to the peripheral frame arrangement one or more cleaner fish shelters, wherein a cleaner fish shelter comprises a resting surface and/or a recess. The cleaner fish shelters may comprise, for example, a tube member fixed in alignment with a peripheral frame member and having apertures formed in the side surface of the tube member for access by the cleaner fish. Alternatively, the cleaner fish shelter may comprise a bracket member which may be fixed, for example, to the underside of a frame member to form a recess and rest surface. As a further alternative, the cleaner fish shelter may comprise a stack of tube members, the ends of which are open to allow cleaner fish to shelter inside the tube members. In a still further alternative, the peripheral frame member comprises apertures therein which allow a cleaner fish to pass and rest within it.

It is believed that providing rest surfaces or recesses for cleaner fish at or near the substrate level may enhance the habitat for the cleaner fish and potentially enhance lifespan.

The apparatus of the invention is slightly negatively buoyant, e.g. so that it remains suspended when suspended within an aquaculture system and can gently sink (and be relatively easily raised). An apparatus comprising a peripheral frame arrangement may be ballasted to ensure slight negative buoyancy. For example, an apparatus may comprise of a peripheral frame arrangement of hollow pipes and may be ballasted with weight inside the tube, e.g. chains extended through the pipes.

Preferably, the average specific gravity of the apparatus is from 1.05 to 2.5, preferably 1.1 to 2 and more preferably 1.2 to 1.5 and preferably no more than 1.3. In one embodiment, the average specific gravity is from 1.05 to 1.1.

A habitat support arrangement of the invention comprises a habitat support apparatus as defined above and extending therefrom, preferably upwards therefrom (when *in situ* in a marine environment), an arrangement of habitat-forming natural aquatic flora for cleaner fish.

The habitat-forming natural aquatic flora may be any suitable aquatic flora for providing a suitable habitat for cleaner fish such as wrasse and/or lumpfish. For example, the aquatic flora may be a seaweed. Preferably the aquatic flora comprises kelp.

The aquatic flora, such as kelp, is attached to the support substrate, such as tensioned rope strands, e.g. by holdfasts (which are the root system of the kelp which grow from the spore that first attaches itself to the rope strands).

The aquatic flora are preferably disposed in the habitat support region at a density suitable to provide a habitat to cleaner fish such as wrasse and/or lumpfish. More preferably aquatic flora are disposed in the habitat support region at a plant density of from 1 to 50 plants per square meter of habitat support region, preferably 2 to 20, more preferably 3 to 10, more preferably 4 to 8 plants per square meter.

Preferably, the aquatic flora is kelp. The aquatic flora may extend for a length of up to 3 m, more preferably up to 2 m and preferably at least 30 cm, e.g. at least 0.5 m.

Suitable kelp species for use in the habitat support arrangement of the present invention include, for example, one or a combination of Alaria esculenta, Laminaria digitata, Laminaria hyperborea, Laminaria saccharina and Saccorhiza polyschides.

Preferably, the habitat-forming aquatic flora extends from and is attached to the habitat support substrate.

The apparatus of the habitat support arrangement is slightly negatively buoyant.

Preferably, the average specific gravity of the habitat support arrangement is from 1.05 to 2.5, preferably 1.1 to 2 and more preferably 1.2 to 1.5 and preferably no more than 1.3.

Where the cleaner fish is wrasse, it may comprise any suitable species of wrasse and optionally a mixture of wrasse species. For example, the wrasse may comprise one or a combination of ballan wrasse (labrus bergylta), cuckoo wrasse (labrus mixus), corkwing wrasse (crenilabrus melops), goldsinny wrasse (Ctenolabrus rupestris), rock cook wrasse (Centrolabrus exoletus), scale-rayed wrasse (Acantholabrus palloni) and Ballion's wrasse (Symphodus bailloni). Preferably, the wrasse comprise ballan wrasse, corkwing, goldsinny, rock cook and/or cuckoo wrasse and most preferably ballan wrasse.

The apparatus and arrangement of the invention find utility in marine salmon farm cages, especially in view of problems with lice infestations among salmon in marine salmon farms. The aquaculture cage may be any suitable cage type. It may, for example, comprise steel cage systems (which are typically square or rectangular) or circular, typically plastic, cage systems, examples of which can be found at https://www.akvagroup.com/pen-based-aquaculture/pens-nets.

The present invention finds particular utility for use with circular pens or cages, typically of plastic, and, for example, having a 'hamster wheel' for use with additional services for the aquaculture cage.

The aquaculture cage may be of any suitable size, e.g. 40 to 260 m circumference, preferably 50 to 160 m circumference, more preferably 75 to 125 m circumference.

An apparatus or arrangement of the present invention is configured for suspension within a marine salmon farm cage and for raising and lowering to different depths in the water to provide cleaner fish habitat at a range of depths.

Preferably, the apparatus is configured to be suspended by suspension ropes or cables engaged with the peripheral frame of the apparatus and suspended from a floating member (e.g. a hamster wheel). In one embodiment, the suspension ropes or cables are operably connected with one or more winch mechanisms disposed above the water surface in relation to the floating member and/or the aquaculture facility. In another embodiment, the suspension ropes pass through a floating member (e.g. a hamster wheel) and are secured to the outside cage members, from where operators may manually raise and lower the arrangement in the cage.

Preferably the apparatus/arrangement may be raised to the surface of a fish farm cage or lowered to the bottom of the cage. The depth of the apparatus/arrangement may be adapted according to the operational needs of the fish farm cage and/or according to the seasonal preferences of the cleaner fish. Thus, the cleaner fish can be in a habitat that more closely relates to the natural environment, thereby reducing stress and reducing mortality. For example, the apparatus/arrangement may be suspended at a depth of 3 to 6 m for the summer months and then lowered (e.g. 5 m at a time) to suspend the apparatus at a depth of from 15 to 30 m depth, e.g. for wintering. An additional apparatus/frame can be placed in the fish farm cage at a shallower depth for lumpfish which are far more active in winter.

The apparatus of the invention may be 'seeded' (by which it is intended to mean that aquatic flora spores such as kelp spores settle or are caused to settle on the support substrate, such as ropes, naturally or in a laboratory and may be seeded in the marine fish farm cage (*in situ*) or prior to installing in a fish farm cage.

Seeding of the support substrate with marine flora spores is preferably achieved by suspending or placing the support substrate in a marine environment (outside of a fish farm cage), e.g. in an environment typically subject to tidal flow, but sheltered and having likelihood of spore release in the vicinity. According to this embodiment, the seeding of the support may be carried out installed in a peripheral frame arrangement of an apparatus or prior to installation on the peripheral frame arrangement. In the latter embodiment, the seeding may be carried out on the substrate in a marine environment by suspending the substrate in the sea in an area for spore transport or by attaching it to a propagation frame for seeding. Preferably, when the substrate is rope, the rope may be suspended from floats in the sea or fitted to propagation frames and placed in the water for spore settlement or seeding. An example propagation frame may comprise a frame member (e.g. rectangular or circular) across which support substrate, typically rope strands, may be extended. Alternatively, a propagation frame may comprise a smaller frame member and a larger frame member arranged about the smaller frame member (which are preferably both circular). The support substrate (e.g. lengths of rope) may be extended between them (although may or may not be tensioned). The smaller frame member and/or the larger frame member may be provided with support substrates so that it can be raised from the seabed in shallow waters for the spore settlement process, or may be suspended from anchored floats on the surface. The propagation frame may be formed of any suitable material, but is typically of a similar material and diameter tubing as defined above for the habitat support frames.

Seeded ropes or other substrate may be provided in kit form along with a frame or components for building a frame close to the site for use, for example. The kit may comprises the frame or components thereof along with one or more length of ropes or other substrate, optionally seeded and optionally comprising propagated kelp plants.

After seeding the substrate, the aquatic flora (e.g. kelp) are propagated over several months until the plants are of a viable size to be moved (e.g. 30 cm to 2 m in length). Propagation can take place *in situ* in an aquaculture facility (or fish farm) or prior to installing an apparatus in an aquaculture facility. In the latter arrangement, propagation may optionally take place on substrate disposed in the peripheral frame arrangement of the apparatus or may take place in alternative propagation systems. A propagation system may comprise a frame with lengths of rope extending across the frame or looped about the frame.

Once propagated, substrate with propagated flora (e.g. ropes with propagated kelp) may be fitted to a peripheral frame to form an arrangement and shipping to location. Alternatively, flora propagated substrate may be cut into lengths (or not) and provided as a kit with a frame or a frame arrangement and the flora propagated substrate provided in a protective package comprising, e.g. 1000 litre IBC container or 1000 litre tub. The kit may then be transported and constructed *in situ.*

Thus, there may be a kit for producing a habitat support arrangement for use as a habitat for cleaner fish in an aquaculture facility, the kit comprising a peripheral frame arrangement or frame members for the construction of a peripheral frame arrangement and one or a plurality of elongate support substrates for disposing in relation to the peripheral frame arrangement, the support substrate optionally being pre-seeded with natural aquatic flora or pre-propagated with natural aquatic flora, such as kelp.

There may further be a method of parasite control in an aquaculture system, the method comprising disposing in an aquaculture facility, such as a fish cultivation cage, a habitat support arrangement for cleaner fish as defined above and providing the aquaculture facility with access to the habitat support arrangement a plurality of cleaner fish. Preferably, the parasites comprise sea-lice attached to cultivated fish.

The invention will now be described in more detail, without limitation, with reference to the accompanying Figures.

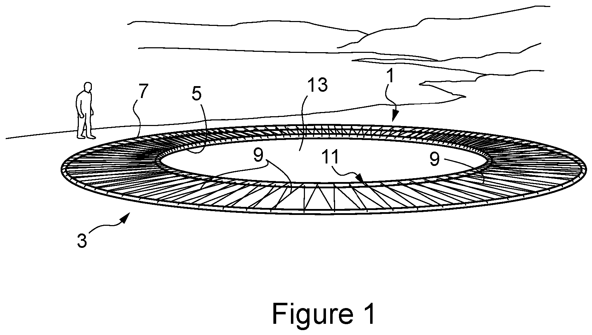

In Figure 1, a habitat support apparatus 1 for providing a habitat for a cleaner fish population comprising, for example, wrasse, for use in a fish (e.g. salmon) cultivation cage (not shown) has the form of an annular frame 3 defining a medial aperture 5. The annular frame 3 is formed of an inner tubular ring 5 and an outer tubular ring 7, which are held in position relative to one another by tensioned lengths of rope 9 threaded through holes 11 in each of the inner and outer tubular rings 5,7. The annular frame 3 has a diameter of 9 m, being the diameter defined by outer tubular ring 7. The medial aperture 13 is defined by inner tubular ring 5 has a diameter of 6 m. The inner and outer tubular rings 5,7 themselves are tubular and have a diameter of 90 mm.

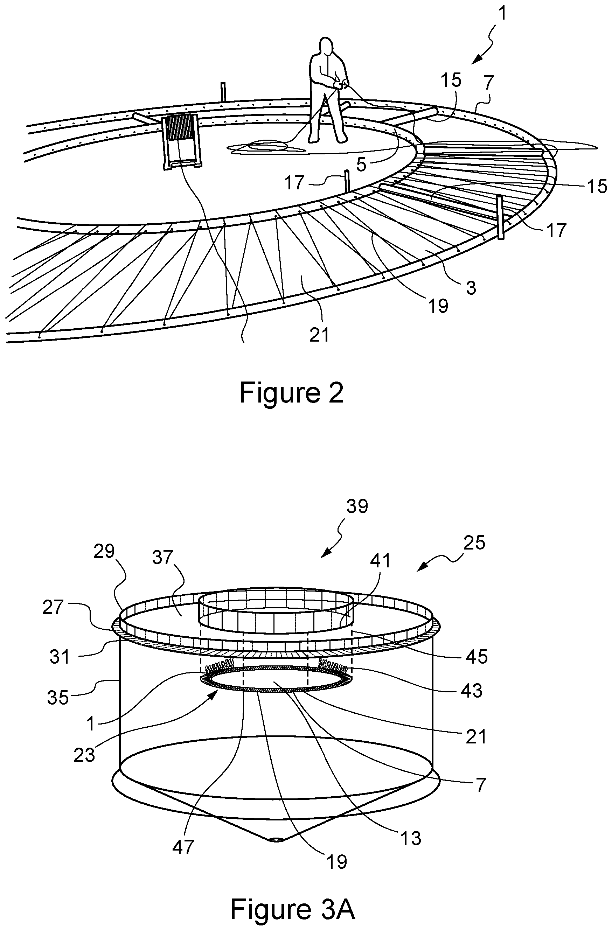

The habitat support apparatus 1 of Figure 1 is constructed from 90 mm diameter, 8 mm wall thickness polyethylene pipe (of the type typically used as 'feed pipes' in the salmon farming industry). A length of pipe is formed into a ring and secured to form inner tubular ring 5 and a second length of pipe is formed into a second ring and secured to form an outer tubular ring 7. The ring of pipe of each of the inner and outer tubular rings 5,7 is secured into a ring by providing a sleeve formed of a short length of the pipe of say 1 to 2 m. This short length of 'sleeve' pipe is cut lengthwise at one side and a small amount of material removed from the pipe along the length (e.g. a cm or so) so that the pipe can snugly fit inside the inner diameter of the normal pipe. It may then be simply screwed in place to secure it. Pairs of holes 11 of about 13 mm diameter are formed in each of the inner and outer tubular rings 5,7 at between 30 cm and 40 cm intervals (although this can be varied according to the density of 'kelp forest' required). The inner and outer tubular rings 5,7 are then laid out in concentric arrangement. A series of separators 15 are disposed between the outer and inner tubular rings 5,7 and the outer and inner tubular rings 5,7 staked to the ground with fixing stakes 17, as is shown in Figure 2. Lengths of 12 mm polypropylene rope 9 are each threaded through successive pairs of holes 11 successively on the inner and outer tubular rings 5,7 for about a quarter or a fifth of the circumference of the frame 3, until the full circumference of the area between the inner and outer tubular rings is strung and then tensioned and secured in place to produce a secure arrangement of inner and outer tubular rings 5,7 and an array of strands 19 extending between them at a length of about 1.5 and separated by up to about 40 cm. The separators may then be removed and final tensioning of all the strands carried out. The resulting apparatus 1 comprises an annular frame 3 of inner and outer tubular rings 5,7 and therebetween a habitat support region 21 comprising a plurality of tensioned strands 19 of 12 mm diameter polypropylene rope.

Prior to securing the pipes to form each of the inner and outer tubular rings, ballast may be added to within the pipes. The ballast comprises a series of lengths of chain which may be inserted into the pipe of each of the inner and outer tubular rings 5,7 and distributed evenly about them (and affixed to the rings 5,7 themselves) so as to add 12 kg in weight to the outer tubular ring 7 and 9 kg in weight to the inner tubular ring, which is considered sufficient to keep them suitably negatively buoyant for suspending within an aquaculture cage.

In use, the strands 19 serve as a growth substrate for the kelp and thus represent a 'base' of a resulting kelp forest.

The habitat support apparatus 1 is disposed in a seawater location to be 'seeded' with kelp spores. A sheltered location with sufficient tidal flow and close to existing kelp plants is preferred. Kelp spores will tend to settle on the rope strands and then attach to the strands whereupon they will propagate into established plants. After 2 to 6 months propagation, when the plants are from 30 cm to 1 m in length, the habitat support apparatus 1 together with the attached kelp provide a habitat arrangement apparatus 23. The habitat arrangement apparatus 23 may be raised to the surface, lifted from the water onto a transportation vessel and transported to an aquaculture cage (not shown), e.g. salmon cage, and lifted into the cage using cranes.

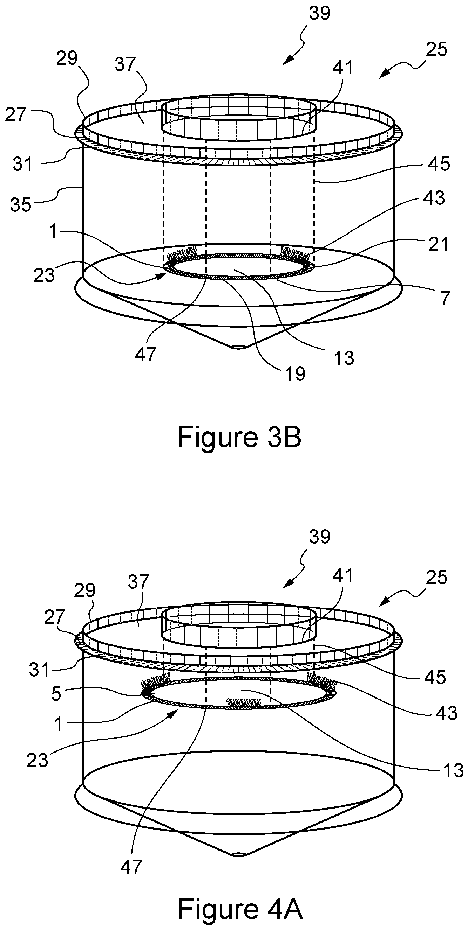

Figure 3A illustrates a habitat support arrangement 23 disposed in an aquaculture (e.g. salmon) cage 25 in a first, relatively shallow, configuration (which may be moved to a deeper configuration by lengthening suspension cables or ropes 45, as shown in Figure 3B). The cage 25, say of 120 m circumference, typically comprises an annular floating frame 27 comprising a concentric pair of floating polyethylene pipes and a polyethylene tube hand rail 29. A walkway 31 may be supported by annular floating frame 27. Suspended from the frame 27 by a series of suspension ropes 33 is net 35 (typically of polypropylene), defining the fish farm area. On the water surface 37, within the perimeter of the annular floating frame 27 and typically moored thereto is floating hamster wheel 39 for use in providing services to the cage 25 (e.g. supporting feeders or camera systems). The hamster wheel 39 is typically made of 250 mm diameter plastic (e.g. polyethylene) for the floating member 41. Habitat support arrangement 23, comprising habitat support apparatus 1 of Figure 1 and cultivated kelp 43 attached to rope strands 19 in the habitat support region 21, is suspended within the cage 25 via the floating member 41 of the hamster wheel 39 using suspension cables or ropes 45. The slightly negatively buoyant nature of the habitat support arrangement 23 keeps the suspension cables or ropes 45 under tension but is easily supported by the floating hamster wheel 39. The suspension cables or ropes 45 are attached to outer tubular ring 7 at various attachment locations 47 about the circumference thereof. The depth of the habitat support apparatus 1 (and thus the habitat for cleaner fish) may be controlled by raising and lowering habitat support apparatus 1 using the suspension cables or ropes 45 by a suitable mechanism (not shown). The ropes will typically extend from the outer ring 7, through the middle of the hamster wheel 39 and out over the top of the hamster wheel and be tied off at the walkway. From here, operators may control its positioning. Alternatively, for example, the suspension system may comprise a winch winding the cables and ropes about a spool situated at the centre of the hamster wheel 39. Figure 3A illustrates a relatively shallow configuration of a habitat support apparatus 1 in a habitat system 49 (comprising habitat arrangement apparatus 23, suspension cables or ropes 45 and winch arrangement, not shown) for providing a habitat in the summer or warmer months. A relatively deep configuration of a habitat support apparatus 1 in such a habitat system 49 is achieved by lowering the apparatus 1 to a greater depth more suitable for the cleaner fish during the winter as illustrated in Figure 3B. This is done my lengthening support cables or ropes 45, e.g. by unwinding them, releasing a length of surplice cable or rope at the surface and re-securing. This system thereby provides natural habitat for cleaner fish at different depths according to seasonal behaviour of the cleaner fish. By providing a system that better mimics natural behaviours, cleaner fish stress and mortality can be reduced.

The medial aperture 13 allows a camera system (not shown), which may be suspended from a camera support arrangement (not shown) floating at the centre of the hamster wheel 39 and moored thereto, to operate cameras up and down the centre of the cage 25 to monitor farmed fish and feeding behaviour without obscuring the passage of the camera. Further, feeding of salmon can be carried out without difficulty relative to the habitat arrangement apparatus 23.

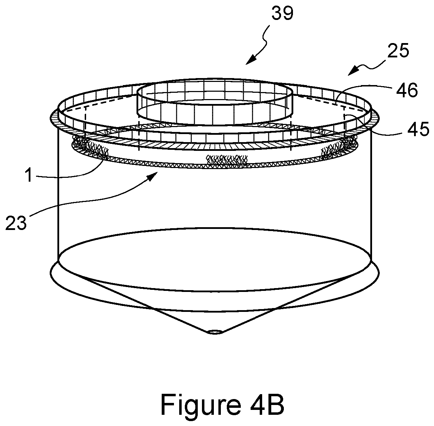

Figure 4A illustrates a habitat support arrangement 23 of an alternative embodiment in which the apparatus 1 has the form of an annular frame 3 defining a medial aperture 13, as in Figures 3A and 3B only being larger in diameter relative to the diameter of the cage 25 (compared with the embodiments in Figures 3A and 3B). In this embodiment, the apparatus 1 is suspended from the hamster wheel 39 via suspension cables or ropes 45 linked to inner tubular ring 5 at various attachment locations 47 about the circumference thereof. Figure 4B illustrates a habitat support arrangement 23 disposed in a cage 25 in which the diameter of the apparatus 1 is still larger relative to the diameter of the cage 25. According to this embodiment, the apparatus 1 is suspended from suspension cables or ropes 45 extending from a linkage cable 46 connecting the cage 25 edge to the hamster wheel 39.

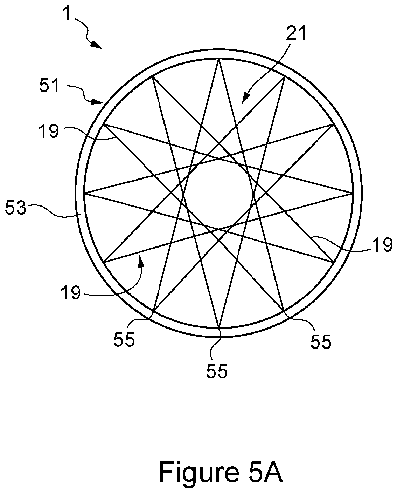

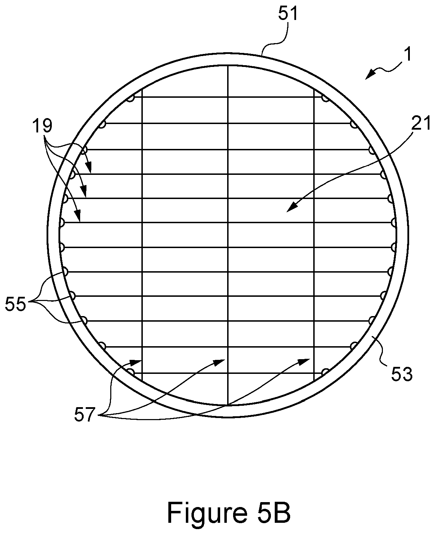

Figures 5A and 5B illustrate an alternative embodiment of a habitat support apparatus 1 which comprises a circular frame 51 comprising a circular tubular ring 53 of 90 mm diameter 8mm thick polyethylene pipe. The tubular ring 53 is made using a length of pipe formed into a circular tube by the same inserted sleeve method used for making inner and outer tubular rings 5,7 in the embodiment of Figure 1 above. The tubular ring 53 defines a habitat support region 21 of about 4 m diameter and characterised by an arrangement of rope strands 19 to act as substrate for kelp propagation extending across habitat support region 21. In Figure 5A, the rope strands 19 are arranged in a criss-cross arrangement like the spokes of a wheel. The tensioned rope strands are formed by threading 12 mm diameter lengths of polypropylene rope through pairs of holes (e.g. of 25 mm diameter) in the tubular ring, passing across close to the middle of the habitat support region 21. The pairs of holes are typically separated from adjacent pairs of holes about the length of the frame by about 1 m so that nodes or connection points 55 of the tensioned strands 19 are separated by about 1 m. The resulting structure, once the lengths of rope are secured, is made strong by the frame and spoke form. In Figure 5B, strands 19 are formed as a series of parallel cords across the circular frame pairs of connection points 55 and separated by 30 to 50 cm to form a linear array of strands 19. The strands 19 are formed each by an individual length of rope secured at each end to respective connection points 55 (e.g. using a fixing) on the circular frame 51. Structural rope or cables 57, extend across the habitat support region 21 in a direction perpendicular to the strands 19.

When using a habitat support apparatus 1 of Figure 5A or 5B, it can be disposed anywhere in an aquaculture cage 25, with suspension cables or ropes (not shown) extending from the circular frame 51 to one or more suspension point on a hamster wheel or anchor rope. The apparatus 1 can again be raised and lowered to facilitate seasonal behaviour of the cleaner fish whose habitat it supports. Multiple such apparatus of Figure 5A or 5B can be disposed in an aquaculture cage 25.

The habitat support apparatus 1 of Figures 5A and 5B can be used to propagate kelp in the same way as Figure 1, as described above, and then provided to a fish farmer ready to dispose in the cage. The habitat support apparatus of Figure 5B, having a series of strands 19 connected at each end at connection points 55 of a circular frame 1, can be provided as a kit to a fish farmer, the kit comprising a circular frame 1 or a length of tubular pipe ready for fixing into a circular frame, optionally with pre-fixed attachment points and a length or pre-cut plurality of lengths of rope for connecting to the attachment points, the lengths being pre-seeded with kelp spores or pre-propagated with mature or semi-mature kelp. Such pre-propagated rope lengths may be supplied in a barrel or tub containing seawater, or packaged in an ambient moist environment ready for stringing to the frame on-site.

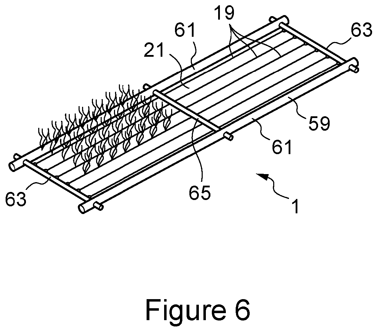

Figure 6 illustrates a further alternative embodiment of a habitat support apparatus 1 in which a rectangular frame 59 is composed of two tubular frame members 61 disposed in parallel arrangement at each side of the apparatus 1 and defining a longitudinal direction and two transverse end frame members 63. The tubular frame members 61 and end frame members 63 together define a habitat support region 21 characterised by a series of tensioned strands 19 of rope (optionally pre-seeded or pre-propagated with kelp). A separator 65 (or more than one separator) may provide additional structure between the tubular frame members 61. The tensioned strands 19 extend along a length of the rectangular frame 59 to form a linear array (although they could just as well be arranged across a width) with suitable separation (e.g. 20 to 50 cm). The tensioned strands 19 are shown as discrete lengths of rope attached at each end to connection points 55 along each of the end frame members 63 in the same way as in Figure 5B although they may alternatively be threaded through pairs of holes in the same manner as in Figure 1 above.

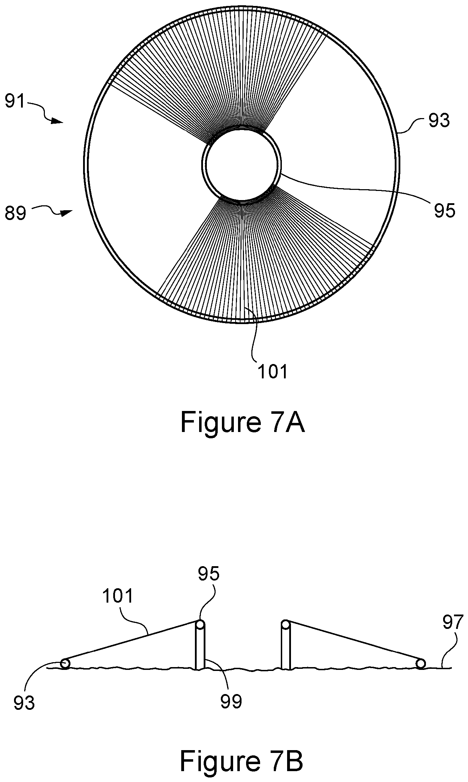

Figure 7A illustrates, in plan view, a propagation system 89 comprising a propagation frame 91 to produce ropes having kelp propagated on them for use in modular habitat support arrangements (or kits) for on-site assembly. The frame 91 comprises an outer tubular ring member 93 and an inner tubular ring member 95, which is typically of a diameter of less than half outer member 93 and more typically 10 to 25% of the diameter of the outer member 93. The propagation system 89 may comprise a planar frame arrangement. Alternatively, as illustrated in Figure 7B, which shows the propagation system 89 in cross-section in location on a seabed 97, inner tubular ring member 95 may be supported on uprights supports 99 so that *in situ* on the seabed 97, the inner tubular ring member 95 is elevated from the seabed 97. Lengths of rope 101 are extended between the inner and outer tubular ring members 95,93. The raised configuration, according to this embodiment, allows water flow through the lengths of rope 101 encouraging kelp spore settlement and can then be allowed to propagate *in situ.* When the kelp reach a desired growth level, the propagated lengths of rope 101 can be 'harvested' and shipped with a frame kit and assembled on-site near an aquaculture cage to form a habitat support arrangement.

The invention has been described with reference to a preferred embodiment. However, it will be appreciated that variations and modifications can be effected by a person of ordinary skill in the art without departing from the scope of the invention defined by the appended claims.

## Claims

1. A habitat support arrangement (23) for cleaner fish habitat for use in marine salmon farm cages (25), the habitat support arrangement (23) comprising a habitat support apparatus (1) and extending therefrom an arrangement of habitat-forming natural aquatic flora (43), the habitat support apparatus (1) comprising
a peripheral frame arrangement comprising one or more frame members (5,7,53,61,63,93) configured in an arrangement to define a habitat support region (21) between the one or more frame members (5,7,53,61,63,93), the habitat support region (21) comprising one or more support substrates (19) for supporting the habitat-forming natural aquatic flora (43) for use as cleaner fish habitat, the one or more support substrates (19) comprising elongate members extending between two frame members (5,7,53,61,63,93) or two portions of a frame member (5,7,53,61,63,93),
and wherein the apparatus (1) is negatively buoyant and configured for suspension within a salmon farm cage (25) and for raising and lowering within the salmon farm cage (25) to different depths.

2. An arrangement (23) as claimed in claim 1, wherein the apparatus (1) is configured to be suspended by suspension ropes or cables (45) engaged with the peripheral frame and suspended from a floating member (41) and wherein the suspension ropes or cables (45) are optionally operably connected with one or more winch mechanisms disposed above the water surface in relation to the floating member (41) and/or the salmon farm cage (25).

3. An arrangement (23) as claimed in claim 1 or claim 2, wherein the support substrates comprise any one or combination of netting, metal rods, surface-treated plastic rods or strands of rope such as polypropylene rope having a diameter of from 6 to 25 mm.

4. An arrangement (23) as claimed in any one of the preceding claims, wherein the apparatus (1) defines a generally planate or flattened configuration **characterized by** an aspect ratio of width to depth of at least 5:1 when the peripheral frame arrangement is disposed in a plane generally parallel with the water surface.

5. An arrangement (23) as claimed in any one of the preceding claims, wherein there is provided disposed in, on or in relation to the peripheral frame arrangement one or more cleaner fish shelters, wherein a cleaner fish shelter comprises a resting surface and/or a recess.

6. An arrangement (23) as claimed in any one of the preceding claims, wherein the apparatus (1) comprises a circular, oval or elliptical shape, a triangular shape, a regular or irregular quadrangular shape, such as a rectangle, a regular or irregular pentagonal shape, a regular or irregular hexagonal shape, a regular or irregular heptagonal shape or a regular or irregular octagonal shape.

7. An arrangement (23) as claimed in any one of claims 1 to 5, wherein the peripheral frame arrangement comprises an outer peripheral frame (7) and an inner peripheral frame (5), each of the outer peripheral frame (7) and the inner peripheral frame (5) formed of one or more frame members, wherein the area between the outer peripheral frame (7) and the inner peripheral frame (5) defines the habitat support region (21).

8. An arrangement (23) as claimed in claim 7, wherein the inner peripheral frame (5) defines a medial aperture in the apparatus.

9. An arrangement (23) as claimed in claim 7 or claim 8, wherein the peripheral frame arrangement is an annular frame.

10. A habitat support apparatus (1) for use in a habitat support arrangement (23) of any one of claims 1 to 9, the apparatus (1) comprising
a peripheral frame arrangement comprising one or more frame members (5,7,53,61,63,93) configured in an arrangement to define a habitat support region (21) between the one or more frame members (5,7,53,61,63,93), the habitat support region (21) comprising one or more support substrates (19) for supporting the habitat-forming natural aquatic flora (43) for use as cleaner fish habitat, the one or more support substrates (19) comprising elongate members extending between two frame members (5,7,53,61,63,93) or two portions of a frame member (5,7,53,61,63,93), wherein the apparatus (1) is negatively buoyant and configured for suspension within a salmon farm cage (25) and for raising and lowering within the salmon farm cage (25) to different depths.

11. A fish cultivation system comprising a salmon cultivation cage (25) and suspended therein a habitat support arrangement (23) as defined in any one of claims 1 to 9, wherein the habitat support arrangement (23) is suspended from a floating member (41) disposed within a perimeter of the salmon cultivation cage (25) and which may be raised or lowered to varying depths within the salmon cultivation cage (25) by way of a winch arrangement disposed in relation to the salmon cultivation cage (25).

## Patentansprüche

1. Habitatstützanordnung (23) für ein saubereres Fischhabitat zur Verwendung in Meereslachsfarmkäfigen (25), wobei die Habitatstützanordnung (23) eine Habitatstützvorrichtung (1) und eine sich davon erstreckende Anordnung von habitatbildender natürlicher aquatischer Flora (43) umfasst, wobei die Habitatstützvorrichtung (1) umfasst:
eine Umfangsrahmenanordnung, umfassend ein oder mehrere Rahmenelemente (5, 7, 53, 61, 63, 93), die in einer Anordnung konfiguriert sind, um eine Habitatstützregion (21) zwischen dem einen oder den mehreren Rahmenelementen (5, 7, 53, 61, 63, 93) zu definieren,
wobei die Habitatstützregion (21) ein oder mehrere Stützsubstrate (19) zur Unterstützung der habitatbildenden natürlichen aquatischen Flora (43) zur Verwendung als ein saubereres Fischhabitat umfasst,
wobei das eine oder die mehreren Stützsubstrate (19) längliche Elemente umfassen, die sich zwischen zwei Rahmenelementen (5, 7, 53, 61, 63, 93) oder zwei Abschnitten eines Rahmenelements (5, 7, 53, 61, 63, 93) erstrecken,
und wobei die Vorrichtung (1) negativ schwimmfähig ist und zur Abhängung innerhalb eines Lachsfarmkäfigs (25) konfiguriert und zum Anheben und Absenken innerhalb des Lachsfarmkäfigs (25) auf unterschiedliche Tiefen konfiguriert ist.

2. Anordnung (23) nach Anspruch 1, wobei die Vorrichtung (1) dazu konfiguriert ist, durch Abhängeseile oder -kabel (45) abgehängt zu werden, die mit dem Umfangsrahmen im Eingriff stehen, und von einem Schwimmelement (41) abgehängt zu werden, und wobei die Abhängeseile oder -kabel (45) optional funktionsfähig mit einem oder mehreren Windenmechanismen verbunden sind, die über der Wasseroberfläche im Verhältnis zu dem Schwimmelement (41) und/oder dem Lachsfarmkäfig (25) angeordnet sind.

3. Anordnung (23) nach Anspruch 1 oder Anspruch 2, wobei die Stützsubstrate ein beliebiges oder eine beliebige Kombination von Netz, Metallstäben, oberflächenbehandelten Kunststoffstäben oder Strängen eines Seils, wie eines Polypropylenseils mit einem Durchmesser von 6 bis 25 mm, umfassen.

4. Anordnung (23) nach einem der vorhergehenden Ansprüche, wobei die Vorrichtung (1) eine allgemein flache oder abgeflachte Konfiguration definiert, die durch ein Formverhältnis von Breite zu Tiefe von mindestens 5:1 gekennzeichnet ist, wenn die Umfangsrahmenanordnung in einer Ebene angeordnet ist, die allgemein parallel zu der Wasseroberfläche ist.

5. Anordnung (23) nach einem der vorhergehenden Ansprüche, wobei ein oder mehrere sauberere Fischunterstände in, auf oder im Verhältnis zu der Umfangsrahmenanordnung angeordnet vorgesehen sind, wobei ein sauberer Fischunterstand eine Ruhefläche und/oder eine Aussparung umfasst.

6. Anordnung (23) nach einem der vorhergehenden Ansprüche, wobei die Vorrichtung (1) eine Kreis-, ovale oder elliptische Form, eine Dreiecksform, eine regelmäßige oder unregelmäßige viereckige Form, wie ein Rechteck, eine regelmäßige oder unregelmäßige fünfeckige Form, eine regelmäßige oder unregelmäßige sechseckige Form, eine regelmäßige oder unregelmäßige siebeneckige Form oder eine regelmäßige oder unregelmäßige achteckige Form umfasst.

7. Anordnung (23) nach einem der Ansprüche 1 bis 5, wobei die Umfangsrahmenanordnung einen äußeren Umfangsrahmen (7) und einen inneren Umfangsrahmen (5) umfasst, wobei jeder von dem äußeren Umfangsrahmen (7) und dem inneren Umfangsrahmen (5) von einem oder mehreren Rahmenelementen gebildet werden, wobei der Bereich zwischen dem äußeren Umfangsrahmen (7) und dem inneren Umfangsrahmen (5) die Habitatstützregion (21) definiert.

8. Anordnung (23) nach Anspruch 7, wobei der innere Umfangsrahmen (5) eine mediale Öffnung in der Vorrichtung definiert.

9. Anordnung (23) nach Anspruch 7 oder Anspruch 8, wobei die Umfangsrahmenanordnung ein ringförmiger Rahmen ist.

10. Habitatstützvorrichtung (1) zur Verwendung in einer Habitatstützanordnung (23) nach einem der Ansprüche 1 bis 9, wobei die Vorrichtung (1) umfasst:
eine Umfangsrahmenanordnung, umfassend ein oder mehrere Rahmenelemente (5, 7, 53, 61, 63, 93), die in einer Anordnung konfiguriert sind, um eine Habitatstützregion (21) zwischen dem einen oder den mehreren Rahmenelementen (5, 7, 53, 61, 63, 93) zu definieren,
wobei die Habitatstützregion (21) ein oder mehrere Stützsubstrate (19) zur Unterstützung der habitatbildenden natürlichen aquatischen Flora (43) zur Verwendung als ein saubereres Fischhabitat umfasst,
wobei das eine oder die mehreren Stützsubstrate (19) längliche Elemente umfassen, die sich zwischen zwei Rahmenelementen (5, 7, 53, 61, 63, 93) oder zwei Abschnitten eines Rahmenelements (5, 7, 53, 61, 63, 93) erstrecken, wobei die Vorrichtung (1) negativ schwimmfähig ist und zur Abhängung innerhalb eines Lachsfarmkäfigs (25) konfiguriert und zum Anheben und Absenken innerhalb des Lachsfarmkäfigs (25) auf unterschiedliche Tiefen konfiguriert ist.

11. Fischzüchtungssystem, umfassend einen Lachszuchtkäfig (25) und darin abgehängt eine Habitatstützanordnung (23) nach einem der Ansprüche 1 bis 9, wobei die Habitatstützanordnung (23) von einem Schwimmelement (41) abgehängt ist, das innerhalb einer Umfassung des Lachszuchtkäfigs (25) angeordnet ist, und die mittels einer Windenanordnung, die im Verhältnis zu dem Lachszuchtkäfig (25) angeordnet ist, auf verschiedene Tiefen innerhalb des Lachszuchtkäfigs (25) angehoben oder abgesenkt werden kann.

## Revendications

1. Agencement de support d'habitat (23) pour un habitat de poissons plus propre destiné à être utilisé dans des cages d'élevage de saumons marin (25), l'agencement de support d'habitat (23) comprenant un appareil de support d'habitat (1) et s'étendant depuis celui-ci un agencement de flore aquatique naturelle de formation d'habitat (43), l'appareil de support d'habitat (1) comprenant
un agencement de cadres périphériques comprenant un ou plusieurs éléments de cadre (5, 7, 53, 61, 63, 93) configurés en un agencement pour définir une région de support d'habitat (21) entre le ou les éléments de cadre (5, 7, 53, 61, 63, 93), la région de support d'habitat (21) comprenant un ou plusieurs substrats de support (19) pour supporter la flore aquatique naturelle de formation d'habitat (43) destinée à être utilisée en tant qu'habitat de poissons plus propre, le ou les substrats de support (19) comprenant des éléments allongés s'étendant entre deux éléments de cadre (5, 7, 53, 61, 63, 93) ou deux portions d'un élément de cadre (5, 7, 53, 61, 63, 93),
et dans lequel l'appareil (1) est négativement flottant et configuré pour la suspension au sein d'une cage d'élevage de saumons (25) et pour s'élever et s'abaisser au sein de la cage d'élevage de saumons (25) à différentes profondeurs.

2. Agencement (23) selon la revendication 1, dans lequel l'appareil (1) est configuré pour être suspendu par des cordes ou câbles de suspension (45) engagés avec le cadre périphérique et suspendus depuis un élément flottant (41), et dans lequel les cordes ou câbles de suspension (45) sont en option connectés de manière opérationnelle à un ou plusieurs mécanismes de treuil disposés au-dessus de la surface de l'eau par rapport à l'élément flottant (41) et/ou la cage d'élevage de saumons (25).

3. Agencement (23) selon la revendication 1 ou revendication 2, dans lequel les substrats de support comprennent tout élément parmi ou une combinaison de filet, tiges métalliques, tiges en plastique traitées en surface ou torons de corde telle que de la corde de polypropylène ayant un diamètre de 6 à 25 mm.

4. Agencement (23) selon l'une quelconque des revendications précédentes, dans lequel l'appareil (1) définit une configuration généralement aplanie ou aplatie **caractérisée par** un rapport de longueur de largeur sur profondeur d'au moins 5/1 lorsque l'agencement de cadres périphériques est disposé dans un plan généralement parallèle à la surface de l'eau.

5. Agencement (23) selon l'une quelconque des revendications précédentes, dans lequel il est prévu disposés dans, sur ou par rapport à l'agencement de cadres périphériques un ou plusieurs refuges de poissons plus propres, dans lequel un refuge de poissons plus propre comprend une surface de repos et/ou un retrait.

6. Agencement (23) selon l'une quelconque des revendications précédentes, dans lequel l'appareil (1) comprend une forme circulaire, ovale ou elliptique, une forme triangulaire, une forme quadrangulaire régulière ou irrégulière, telle qu'un rectangle, une forme pentagonale régulière ou irrégulière, une forme hexagonale régulière ou irrégulière, une forme heptagonale régulière ou irrégulière ou une forme octogonale régulière ou irrégulière.

7. Agencement (23) selon l'une quelconque des revendications 1 à 5, dans lequel l'agencement de cadres périphériques comprend un cadre périphérique externe (7) et un cadre périphérique interne (5), chacun du cadre périphérique externe (7) et du cadre périphérique interne (5) étant formé d'un ou plusieurs éléments de cadre, dans lequel la zone entre le cadre périphérique externe (7) et le cadre périphérique interne (5) définit la région de support d'habitat (21).

8. Agencement (23) selon la revendication 7, dans lequel le cadre périphérique interne (5) définit une ouverture médiale dans l'appareil.

9. Agencement (23) selon la revendication 7 ou revendication 8, dans lequel l'agencement de cadres périphériques est un cadre annulaire.

10. Appareil de support d'habitat (1) destiné à être utilisé dans un agencement de support d'habitat (23) selon l'une quelconque des revendications 1 à 9, l'appareil (1) comprenant
un agencement de cadres périphériques comprenant un ou plusieurs éléments de cadre (5, 7, 53, 61, 63, 93) configurés en un agencement pour définir une région de support d'habitat (21) entre le ou les éléments de cadre (5, 7, 53, 61, 63, 93), la région de support d'habitat (21) comprenant un ou plusieurs substrats de support (19) pour supporter la flore aquatique naturelle de formation d'habitat (43) destinée à être utilisée en tant qu'habitat de poissons plus propre, le ou les substrats de support (19) comprenant des éléments allongés s'étendant entre deux éléments de cadre (5, 7, 53, 61, 63, 93) ou deux portions d'un élément de cadre (5, 7, 53, 61, 63, 93), dans lequel l'appareil (1) est négativement flottant et configuré pour la suspension au sein d'une cage d'élevage de saumons (25) et pour s'élever et s'abaisser au sein de la cage d'élevage de saumons (25) à différentes profondeurs.

11. Système de pisciculture comprenant une cage de salmoniculture (25) et suspendu en son sein un agencement de support d'habitat (23) selon l'une quelconque des revendications 1 à 9, dans lequel l'agencement de support d'habitat (23) est suspendu depuis un élément flottant (41) disposé au sein d'un périmètre de la cage de salmoniculture (25) et qui peut être élevé ou abaissé à des profondeurs variables au sein de la cage de salmoniculture (25) au moyen d'un agencement de treuil disposé par rapport à la cage de salmoniculture (25).
